# EUROPEAN PATENT APPLICATION

(11) **EP 1 111 352 A1**
(43) Date of publication of application: **27.06.2001**
(21) Application number: 00204741.3
(22) Date of filing: 22.12.2000
(51) Int. Cl.: G01G 15/00, B65G 17/38

(54) **Weighing-machine**

(30) Priority: 24.12.1999 NL 1013955
(71) Applicant: Jan Duivenvoorden Machinetechniek B.V., 2211 VN Noordwijkerhout (NL)
(72) Inventor: Duivenvoorden, Martines Fredericus Johannes, 2171 VD Sassenheim (NL); Duivenvoorden, Johannes Franciscus Cristianes, 2191 BB De Zilk (NL)
(74) Representative: Van Breda, Jacobus

(57) **Abstract**

The invention relates to a weighing machine, comprising a weighing device, at least one container for the product to be weighed, and continuous conveyor means for moving the containers over at least the weighing device, the containers being coupled to the conveyor means by first coupling means permanently connected to the conveyor means and coupled with the guide means. The containers can be uncoupled from the first connecting means, and the containers are connected with the conveyor via substantially non-rigid second connecting means, which second connection means effectuate the conveyance of the containers when the first connecting means are uncoupled.

## Description

The present invention relates to a weighing machine, comprising a weighing device, at least one container for the product to be weighed, and continuous conveyor means for moving the containers over at least the weighing device, the containers being coupled to the conveyor means by first coupling means permanently connected to the conveyor means and coupled with the guide means.

Such a weighing machine is known and is used, for example, for the grading according to weight of products such as fruit and the like. The conveyor means of such a machine generally consist of two parallel continuously circling chains, between which connecting means are provided to which the containers are fastened. Usually the assembly is continuously circling via two driven return wheels. After leaving the first return wheel, the containers pass through a feed portion, a weighing portion and a discharge portion. At the feed portion the products are put into the container. At the weighing portion the container with the product is weighed and subsequently conveyed to the discharge portion. The discharge portion usually comprises several discharge points, while the discharge point where the product is removed from the container, depends on the weight determined.

A problem with such weighing machines is the accurate determination of the weight of the product. Due to the fact that the containers are connected with the coupling means, which in turn are directly attached to the conveyor means, usually a chain, the vibrations in the conveyor means are directly transferred to the containers. This greatly reduces the accuracy of the measurement.

Another drawback is the noise that such weighing machines can make. Especially going on and off the return wheels makes much noise.

Therefore, an object of the present invention is to provide an improved weighing machine. The object is in particular to provide a weighing machine with which it is possible to weigh accurately. The object is in particular to provide a weighing machine with which the machine's vibrations, which may influence weighing, are eliminated.

It is also an object of the invention to provide a weighing machine that causes less nuisance. A particular object of the invention is to provide a weighing machine that makes less noise.

The above-mentioned objects are realized according to the invention with a weighing machine as described in the preamble, which is characterized in that the containers can be uncoupled from the first connecting means, and in that the containers are connected with the conveyor means via substantially non-rigid second connecting means, which second connection means effectuate the conveyance of the containers when the first connecting means are uncoupled.

The measures of the present invention greatly improve the accuracy when determining the weight. At a product speed of more than three products per second and with a measuring range up to 500 grams, a better than 1-gram accuracy of measurement will be obtained.

In order to ensure that the containers containing the products to be weighed are conveyed onto the weighing machine progressively, it is preferred that guides be provided upstream from the weighing machine, over which the containers are conveyed and which measure ensures that the containers become uncoupled from the first connecting means. When the containers are uncoupled from the first connecting means, the second connecting means effectuate the forward movement. Said second connecting means are preferably fabricated from a non-rigid material, in order to prevent the vibrations generated by the machine from being transferred to the containers. Preferably they are fabricated from a material that is especially suitable for buffering the vibrations generated in the machine. According to a further preference, the second connecting means comprise a cord or the like, that for one thing is fastened to the front of a first container and for another thing, viewed in the direction of movement, to (the first connecting means of) a preceding second container. The second connecting means preferably comprise one cord that is fed through guides at the front of the container's sliding elements, the ends of the cord being fastened to the hindmost of the first connecting means of the preceding container.

The invention will now be explained with reference to the drawings depicting one preferred embodiment.

Figure 1, shows a weighing machine according to the invention.

Figure 2, shows a perspective bottom view of a plurality of containers to be used in the weighing machine according to the invention.

Figure 3, shows a portion near the weighing device of the weighing machine according to the invention.

Figures 4 and 5 show portions of the weighing machine shown in Figure 3.

Figure 6, shows a return wheel of the weighing machine according to the invention, over which the containers are conveyed.

Figures 7 and 8 show enlarged portions of the return wheel shown in Figure 6.

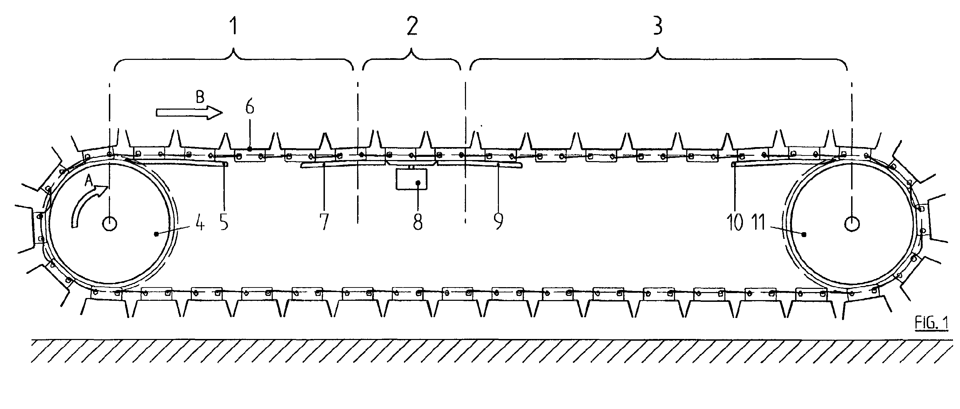

Figure 1 shows a side view of the weighing machine according to the invention. The weighing machine comprises a feed portion 1, a weighing portion 2, and a discharge portion 3. The discharge portion 3 is divided into several discharge points. The weighing machine comprises a first return wheel 4 and a second return wheel 11, around which continuous conveyor means (not shown) and fastened thereto containers 6, are conveyed. The return wheels 4, 11 are rotated in the direction of the arrow A. This results in the containers 6 being conveyed in the direction of the arrow B. The containers 6 successively pass through the sections 1, 2 and 3. At the feed portion 1 the products are put into the containers 6, either manually or automatically. In section 2 the container 6 and the product therein are weighed with the aid of a weighing device 8. The container 6 is subsequently conveyed to the discharge portion 3. At the discharge portion 3 several collecting means (not shown) are provided, into which the products in the containers 6 may conveniently be deposited. This may be done, for example, with the aid of a blow nozzle (not shown) for blowing the product out of the container. Such a method is known in the art.

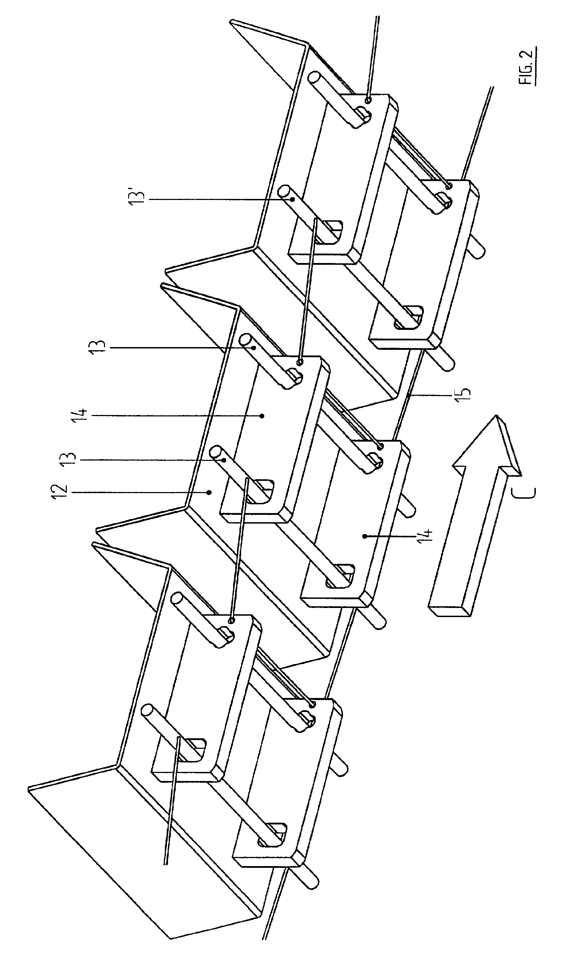

Figure 2, shows a perspective bottom view of three containers. Each container 6 consists of a horizontal portion formed by a carrier plate 12, which has two raised edges at its front and rear side (viewed in the direction of movement C). At its bottom side, each container 6 is provided with two sliding elements 14, comprising openings for the insertion of first connecting elements 13. Each of the connecting elements 13 is at its ends connected with conveyor means (not shown).Said first connecting means 13 are formed of pins which are positioned substantially perpendicularly to the direction of conveyance of the conveyor means and which are inserted through openings in the container. In the situation depicted, the containers are carried by the first connecting means 13. In this embodiment, the front openings in the sliding elements through which the first connecting meets are inserted, are at the top side provided with a recess allowing the containers, in the direction of movement, to be fixed to the first connecting means. This makes a forward or rearward displacement in relation to the first connecting means impossible.

Also shown are the second connecting means 15. In the embodiment depicted, the same consists of a cord fed through guides in the sliding elements. The cord is connected with its ends to the rear one of the first connecting means of the preceding container. When the container is supported by the first connecting means, there will be little or no stress on the second connecting means. In that case the containers will be moved forward mainly by the conveyor means and the first connecting means connected thereto.

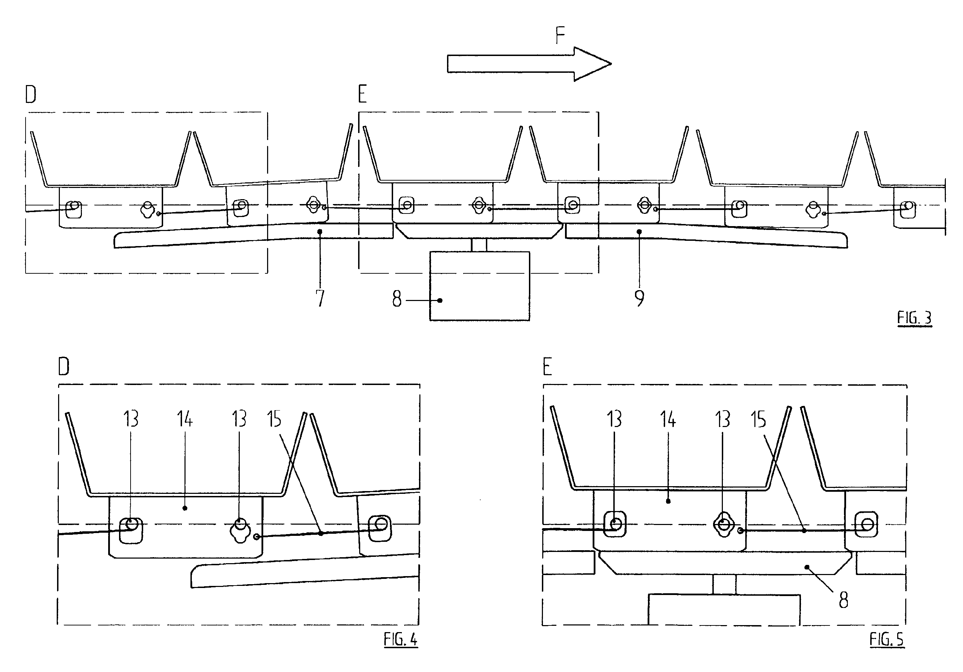

Figure 3 shows the weighing portion of the weighing machine according to the present invention. The weighing portion comprises a weighing device 8, a guide 7 positioned before the weighing device 8, and a guide 9 positioned after the weighing device 8. With a continuous and substantially linear movement of the conveyor means, the first connecting means 13 will also carry out a substantially linear movement. The course of movement is indicated in the figure by a dashed line. With this linear movement, the containers will initially rest on the first connecting means 13 before the guide 7 is reached, as shown in Figure 4. When the assembly reaches the first guide 7, the underside of a sliding element 14 will touch the guide 7, and at a further horizontal movement in the direction of the arrow F as shown in Figure 3, this will result in the assembly comprised of container and, fastened thereunder, the sliding element, being lifted slightly upward. This will result in an uncoupling of the container and the first connecting means 13. Due to the fact that the container is connected by the second connecting means 15 to a first connecting means of the preceding container, said container will be pulled forward without the existence of a direct, rigid coupling between the container and a first connecting means. The second connecting means 15 is preferably comprised of a cord or the like, so that the vibrations from the conveyor system will not be transferred to the container. After a complete uncoupling is realized the container arrives at the weighing device 8. Since the vibrations are not transferred to the container, it is now possible to carry out a very accurate dynamic measurement. Dynamic measurement means that the weight of the container and the product contained therein can be determined while the same are moving in a forward direction. In a further movement in the direction of the arrow F, the container is conveyed over a second guide 9, arranged at a slightly downward slant, again providing a coupling between the first connecting means and the container. This is illustrated in the right-hand portion of Figure 3.

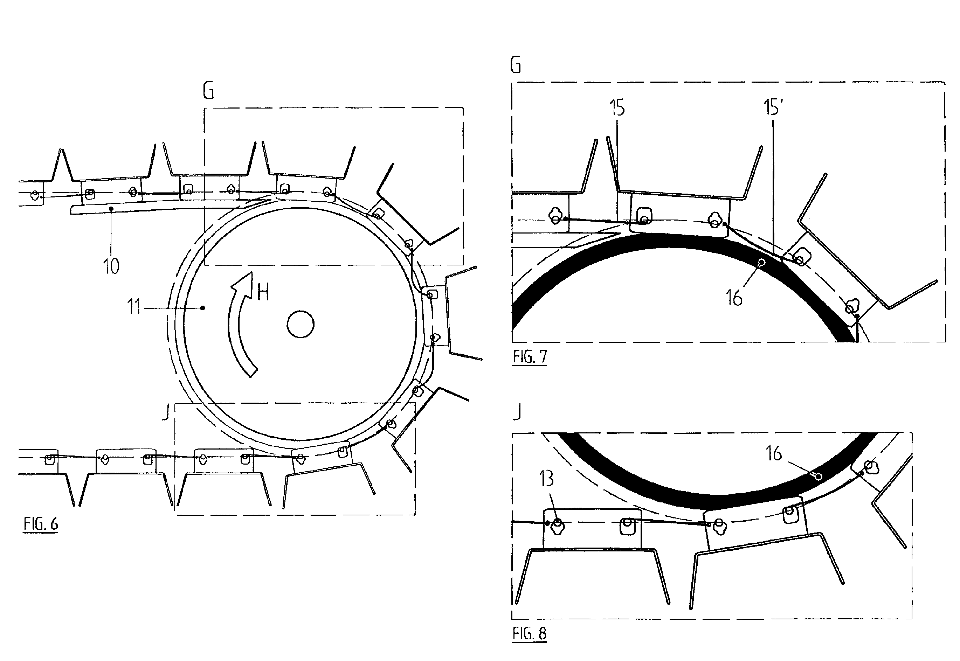

A further improvement of the weighing machine according to the invention is shown in the Figures 6 to 8.

Figure 6 shows a return wheel 11, which rotates in the direction of the arrow H. When the containers are conveyed to the return wheel, they are guided over a guide 10, practically in the same manner shown for the weighing device illustrated in the Figures 3 to 5. This brings the containers to a slightly raised position so that when the containers approach the return wheel 11, the underside of the sliding elements 14 is on a plane with the circumferential surface of the return wheel 11. This provides a very still and silent admission of the sliding elements 14 of the container 6 on the return wheel 11. At the side facing the return wheel 11, the openings in the slide blocks 14 are provided with a recess for receiving the first connecting means 13. This fixes the containers 6 to the leading first connecting means 13 when the same are conveyed over the return wheel 11. Due to the first connecting means 13 being pressed against the side of the opening facing the return wheel 11, and due to their being conveyed around the return wheel 11, the second connecting means 15' will slacken slightly, as shown in Figure 7. The fact that the first connecting means 13 are pressed against the side in the openings of the sliding elements facing away from the carrier plate 12, will also provide a very still conveyance from the return wheel 11, because when being conveyed onward from the return wheel 11 in the direction of the first return wheel 4, the containers are inverted. This situation is illustrated in Figure 8. Due to the first connecting means 13 resting against the side of the openings in the slide blocks 14 facing away from carrier plate 12, no guiding will be necessary when approaching the first return wheel 4. However, when the containers 6 leave the first return wheel 4, as shown in the left-hand portion of Figure 1, it is preferred for a guide 5 to be provided, because when the containers 6 leave the first return wheel 4, they will become displaced in relation to the first connecting means 13. This is because on the return wheel 4, the first connecting means 13 press against the side of the openings in the sliding element 14 that are facing away from the carrier plate 12, while after leaving the return wheel 4, the sides of the containers 6 in which the openings in the sliding elements 14 face the carrier plate 12, rest on the first connecting means 13. The guide 5, as shown in Figure 1, ensures that this operation proceeds gradually to avoid the machine being subjected to sudden stresses, and also to produce less noise.

According to a further embodiment the surface of the return wheels is provided with a rubber coating. This also ensures a gradual conveyance. The result of this is that less noise and less vibration will be generated in the machine. Due to the first connecting means being pressed against the underside of the openings in the container, the sliding elements of the containers will at an appropriate positioning in height become pressed slightly into the rubber surface of the return wheels. This prevents the containers during their conveyance over the return wheels from undergoing an axial displacement.

According to yet a further embodiment, the second connecting means 15 are preferably comprised of one cord. In the case that two cords respectively are fastened on the left and right sliding element 14 under the carrier plates 12, both of which are fastened respectively to the preceding first connecting means of the preceding container, the problem arises of the container 6 being pulled askew over the weighing device 8. This occurs even when there is a very small discrepancy between the length of the left and right second connecting means. This could result in an incorrect determination of the weight.

Of course, the weighing machine may be adapted and modified as shown in the drawings and explained in the above description, without falling outside the scope of the invention. For example, the guides for the second connecting means may comprise separately provided eyes fastened to the sliding elements, or they may be fastened directly to the carrier plate. Another possibility is that the second connecting means are not fastened to the first connecting means but, for example, to the carrier plate of the preceding container.

Additional, for example, extra centring means may be applied such that in the proximity of the weighing device, the movement of the continuous conveyor means, for instance a chain, is a linear movement. Due to the first connecting means being fastened directly to the conveyor means, and the containers being uncoupled therefrom by the guides 7, 9, it is possible to obtain a definite separation between the conveyor means. Additionally it is possible to provide centring means for the containers, which ensure that the containers remain in a central position between the conveyor means. These may in particular be provided in the portion upstream from the weighing device to ensure that the containers are centred when being conveyed over the weighing device. Said centring means are preferably not applied at the weighing portion in order not to cause any undesirable vibrations during weighing. Such centring means may also be provided upstream from the return wheels to ensure that the containers are centred when being conveyed over the return wheels.

It is also possible to use tiltable containers. In that case the products do not need to be blown out of the containers, but will be removed by tilting the containers. The use of such containers is known in the art.

The coupling of the containers with the conveyor means may further be realized by providing just a foremost or just a hindmost first connecting means. On the respective other position, as shown especially in Figure 2, guides will then be applied, for example, guide wheels that merely passively support and guide the container. Yet another possibility is to use one first connecting means that has a suitable unround outline, such as a triangle or a sheet form and which is inserted in a suitably shaped opening in the container. In this way a forward or rearward tilting of the container can be prevented.

## Claims

1. A weighing machine, comprising a weighing device, at least one container for the product to be weighed, and continuous conveyor means for moving the containers over at least the weighing device, the containers being coupled to the conveyor means by first coupling means permanently connected to the conveyor means and coupled with the guide means, **characterized** in that the containers can be uncoupled from the first connecting means, and in that the containers are connected with the conveyor means via substantially non-rigid second connecting means, which second connecting means effectuate the conveyance of the containers when the first connecting means are uncoupled.

2. A weighing machine according to claim 1, **characterized** in that the first connecting means are formed by pins which are positioned substantially perpendicularly to the direction of conveyance of the conveyor means and which are inserted through openings in the container.

3. A weighing machine according to claim 1 or 2, **characterized** in that at their under side, the containers are provided with one or more sliding elements, comprising openings for the insertion of the first connecting means.

4. A weighing machine according to claim 3, **characterized** in that the sliding elements extend substantially in the direction of conveyance and perpendicularly thereto comprise openings for the insertion of the first connecting means.

5. A weighing machine according to claim 1-4, **characterized** in that in the starting situation the containers rest on the first connecting means, while in the vicinity of and on the weighing device means are provided for uncoupling the containers from the first connecting means.

6. A weighing machine according to claim 5, **characterized** in that the means consist of guides on which the containers rest with the sliding elements.

7. A weighing machine according to claim 1-6, **characterized** in that the second connecting means comprise a cord or the like, which is fed through guides in the container and fastened to the preceding container.

8. A weighing machine according to claim 7, **characterized** in that the cord or the like is fed through openings in the sliding elements of the container.

9. A weighing machine according to claim 7 or 8, **characterized** in that the second connecting means of a container comprise one cord which is fed through the guides in the sliding elements, and whose ends are fastened to the hindmost pen of the first connecting means of the preceding container.

10. A weighing machine according to claim 1-9, **characterized** in that the openings for receiving the first connecting means are at least at the topside provided with a recess for, in the direction of conveyance, fixing the first connecting means therein.

11. A weighing machine according to claim 1-10, **characterized** in that the openings for receiving the first connecting means are provided both at the top side and the bottom side with a recess for, in the direction of conveyance, fixing the first connecting means therein.

12. A weighing machine according to claim 1-11, **characterized** in that the machine comprises return wheels supporting the containers, and wherein a guide is provided near at least one return wheel for guiding the container onto the return wheel.

13. A weighing machine according to claim 12, **characterized** in that it comprises a guide after the return wheel upstream from the weighing device and a guide before the return wheel downstream from the weighing device.

14. A method of applying a weighing machine according to one of the preceding claims.

15. Guides for use in a weighing machine according to claim 12 and 13.
